# EUROPEAN PATENT APPLICATION

(11) **EP 2 857 237 A1**
(43) Date of publication of application: **08.04.2015**
(21) Application number: 14176631.1
(22) Date of filing: 10.07.2014
(51) Int. Cl.: B60H 1/00, B60H 1/32, B60H 1/20, B60P 3/20, B61D 27/00, F28D 15/02

(54) **Apparatus and method for controlling temperature of air flow**

(30) Priority: 01.10.2013 US 201361885047 P
(71) Applicant: Linde Aktiengesellschaft, 80331 München (DE)
(72) Inventor: Handley, Simon James, Old Hutton, Kendal, Cumbria LA8 0NS (GB)
(74) Representative: Hofmann, Andreas

(57) **Abstract**

An apparatus (10) for controlling a temperature of an air flow (30, 31) exhausted from a heat exchanger (14) includes
- a heater coil (42) operatively associated with a heat exchange coil (28) of the heat exchanger (14), the heater coil (42) disposed upstream of an exhaust for the heat exchanger (14);
- at least one heat pipe (16) mounted to a heat generating assembly, in particular with said heat generating assembly being selected from the group consisting of an engine, an exhaust for said engine, and a combination thereof; and
- a pipe assembly interconnecting the heater coil (42) and the at least one heat pipe (16), the pipe assembly having a first conduit (44) moving fluid from the heater coil (42) to the at least one heat pipe (16), and a second conduit (46) moving vapour from said fluid from the at least one heat pipe (16) to the heater coil (42) without use of a power generating device.

A related method is also provided.

## Description

### Technical field of the present invention

The present invention relates to a heat transfer apparatus and to a method for controlling temperature of exhaust from a heat transfer apparatus, and in particular wherein heat pipes are used in such an apparatus and method.

### Technological background of the present invention

Heat pipes are used for many applications and with different types of technologies such as for example in the chemical and automotive industries. A heat pipe has no moving parts and basically consists of a vacuum-tight housing, container or shell sealed against an external environment, a wick structure and an amount of working fluid to saturate the wick structure.

Heat in the atmosphere or environment external to and/or in contact with the surface of the heat pipe can be removed from the surface by conduction, convection or radiation. It is not uncommon for a heat pipe to have a heat transfer efficiency exceeding 99 percent. The wick structure lines an inner surface of the heat pipe shell and is saturated with the working fluid.

The wick provides the structure to develop the capillary action for the liquid returning from a condenser (the heat output/sink) to the evaporator (the heat input/source). Since the heat pipe contains a vacuum, the working fluid will boil and take up latent heat of the fluid well below its boiling point at atmospheric pressure. For example, water will boil just above 273 K (0°C) and start to effectively transfer latent heat at such a low temperature.

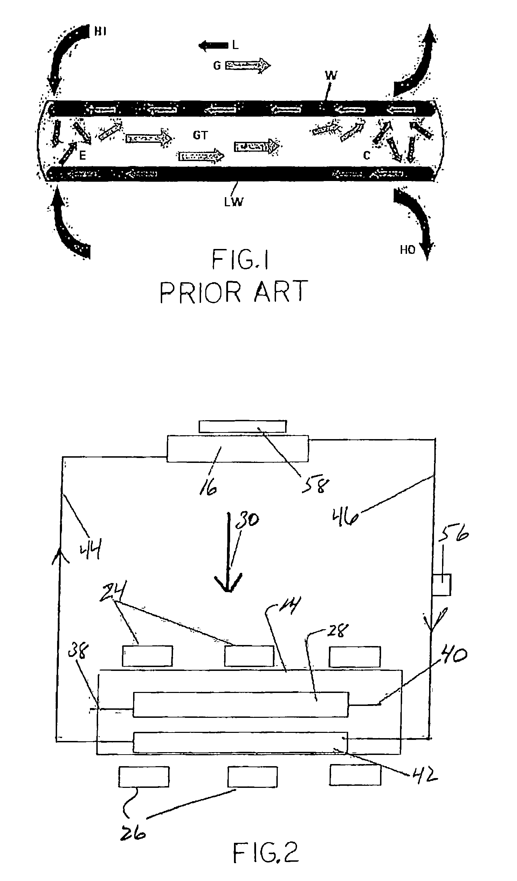

FIG. 1 is representative of a known heat pipe (cf. list of reference numerals at the end of this description concerning the reference numerals in FIG. 1). Heat pipes are much more efficient than many other heat-dissipation apparatus when it comes to transferring heat. The materials chosen for construction of the wick and/or shell of the heat pipe depend upon the temperature conditions in which the heat pipe must operate.

Coolants for the heat pipe range from liquid helium for extremely low temperature applications (2 K to 4 K or -271 °C to -269°C), mercury (523 K to 923 K or 250°C to 650°C) and sodium (873 K to 1,473 K or 600°C to 1,200°C). Indium (2,000 K to 3,000 K or 1,727°C to 2,727°C) for extremely high temperatures may be used.

A majority of heat pipes for low temperature applications use some combination of ammonia (213 K to 373 K or -60°C to 100°C), alcohol (283 K to 403 K or 10°C to 130°C) or water (303 K to 473 K or 30°C to 200°C) as a working fluid. Water, for example, at low pressure will boil at just above 273 K (0°C) at which point the water can begin to effectively transfer latent heat at such a low temperature.

Heat exchangers are known as well. Air flow at an upstream end of the heat exchanger is drawn into same by fans or blowers so that the air flow passes over cooling coils and is exhausted by fans back into for example a compartment to maintain or reduce the temperature of the atmosphere in the compartment.

However, in certain applications it is possible that products in the compartment must be kept at a temperature greater than that which would be provided by the heat exchanger, but not so high a temperature that the product would be destroyed or rendered unusable.

Many refrigeration systems do not have the capacity to cool or chill, and also heat products or an atmosphere in which the products are contained. In certain regions of the world, some products can be excessively cooled, which is detrimental to the products.

For example, transport of flowers should be at not less than 280 K or 7°C, yet no warmer than 283 K or 10°C. Transporting the flowers during winter months may have the vehicle exposed to 273K or 0°C, at which time it is very important that a heater system is installed to provide a balanced temperature for the flowers within the transport vehicle.

The problem is, however, that known heating systems in transport vehicles rely upon separate pumps or motors to generate the necessary heat to be used in conjunction with the atmosphere of the cooled/chilled space to control the temperature of said space.

This requires additional energy and costs be expended to operate the additional pump or motor and also, by its very nature, generates additional heat, creates a larger carbon footprint, and increases operational cost, maintenance and repair for the transportation platform or vehicle.

To accommodate the necessity for cooling and heating, for example, known mechanical refrigeration systems, especially for trucks and vehicles, use either additional electrical heaters or diesel motors which each have the detrimental effect of increasing energy required and used, and therefore an increased carbon footprint for the system.

Therefore, an apparatus and method would be desirable which does not require an additional heater or motor for their related power or energy.

### Disclosure of the present invention: object, solution, advantages

Starting from the disadvantages and shortcomings as described above and taking the prior art as discussed into account, an object of the present invention is to overcome the problems that earlier apparatus and methods have experienced, in particular to provide for an apparatus as well as for a method not requiring an additional heater or motor for their related power or energy.

This object is accomplished by an apparatus comprising the features of claim 1 as well as by a method comprising the features of claim 12. Advantageous embodiments and expedient improvements of the present invention are disclosed in the respective dependent claims.

The present invention basically provides for a temperature control for a heat transfer system in containers, and more particularly to an apparatus for controlling a temperature of an air flow exhausted from a heat exchanger, the apparatus comprising
- a heater coil operatively associated with a heat exchange coil of the heat exchanger, the heater coil disposed upstream of an exhaust for the heat exchanger;
- at least one heat pipe mounted to a heat generating assembly; and
- a pipe assembly interconnecting the heater coil and the at least one heat pipe, the pipe assembly having a first conduit moving fluid from the heater coil to the at least one heat pipe, and a second conduit moving vapour from said fluid from the at least one heat pipe to the heater coil without use of a power generating device.

According to an expedient embodiment of the present invention, said heat generating assembly may be selected from the group consisting of an engine, an exhaust for said engine, and a combination thereof.

The present invention further provides for a method of controlling a temperature of an air flow exhausted from a heat exchanger, the method comprising
- moving a liquid from a heat exchange coil of the heat exchanger to at least one heat pipe;
- exposing the at least one heat pipe to a heat generating device;
- changing the phase of the liquid to a vapour in the at least one heat pipe;
- moving the vapour from the at least one heat pipe to the heat exchange coil without use of a power generating device; and
- moving the air flow exhausted over the heat exchange coil for warming said air flow.

The present method may further comprise monitoring the temperature of the air flow provided to the heat exchanger for adjusting an amount of the vapour introduced to the heat exchange coil.

According to a preferred embodiment of the present invention, a cryogen, in particular liquid nitrogen or carbon dioxide, may be circulated through the heat exchange coil to provide cooling of the air flow.

The apparatus according to the present invention as well as the method according to the present invention do not require additional heaters or power to control the temperature of a space for products, such as food products. Energy to operate the embodiments of the present invention will be obtained from heat of the transport vehicle engine and/or its exhaust, and from the external atmosphere if the temperature is great enough.

The present invention finally provides for the use of at least one apparatus as outlined above and/or of a method as outlined above with at least one intermodal platform, in particular with at least one containerized vehicle transport, for example with at least one barge, railroad flatbed or truck.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 and on claim 12; further improvements, features and advantages of the present invention are explained below in more detail with reference to preferred embodiments by way of non-limiting example and to the appended drawing figures taken in conjunction with the following description of the embodiments, of which:
FIG. 1 shows an example of a known heat pipe; and
FIG. 2 to FIG. 4 show schematic drawings of temperature control apparatus embodiments for use with a heat transfer system of the present invention.

In the appended drawing figures, like equipment is labelled with the same reference numerals throughout the description of FIG. 2 to FIG. 4.

### Detailed description of the drawings; best way of embodying the present invention

Referring to FIG. 2 to FIG. 4, the apparatus or system of the present embodiments is shown generally at 10, and is used also for the method of the present inventive embodiments. The apparatus 10 can be used with a containerized vehicle transport such as a truck 12, railroad flatbed or barge. In summary, the apparatus 10 of the present embodiments can be used with any intermodal platform.

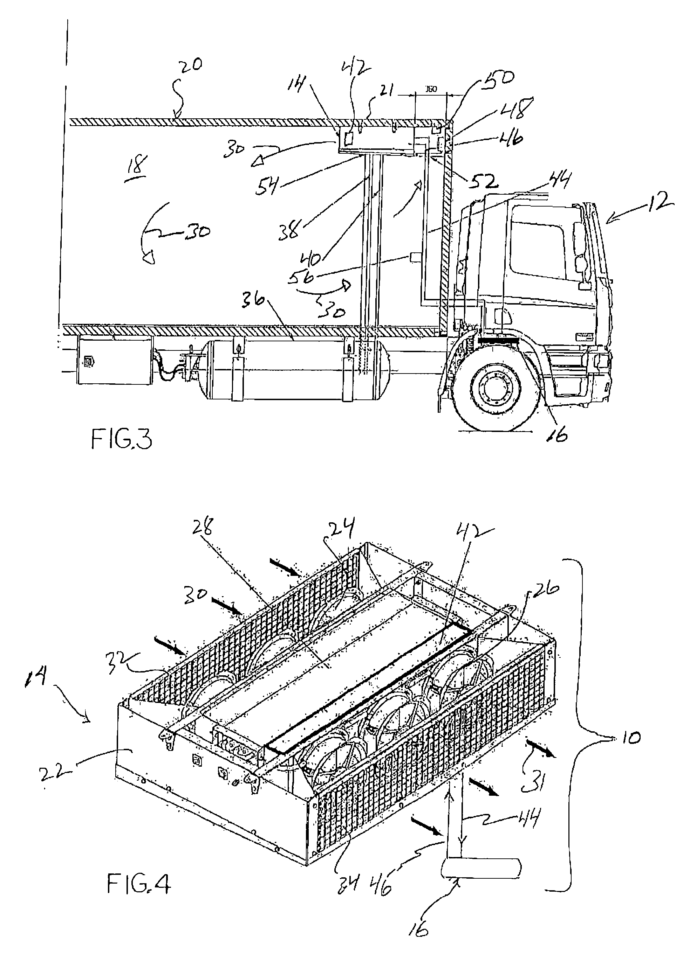

Referring in particular to FIG. 3, the apparatus 10 includes a heat exchanger 14 and at least one heat pipe 16.

The heat exchanger 14 can be mounted in a chamber or space 18 of a container 20 which may be removably mounted to the truck 12 or other intermodal platform.

The at least one heat pipe 16 as shown in FIG. 3, is mounted or adjacent to an engine block or manifold of the truck 12.

An alternate embodiment can have the heat pipe 16 mounted or adjacent to an exhaust system for the engine of the truck 12. The engine and exhaust generate a sufficient amount of heat to effect phase change of the working fluid used in the embodiments.

The heat exchanger 14 includes a housing 22 having at one side thereof at least one intake fan 24 and at an opposite side thereof at least one exhaust fan 26.

A heat exchange coil 28 is disposed in the housing 22 between the at least one intake fan 24 and the at least one exhaust fan 26 so that an air flow 30 is drawn into the housing 22 to pass over the heat exchange coil 28, after which an air flow 31 is exhausted by the at least one exhaust fan 26.

The housing 22 includes a mesh sidewall 32 at the at least one intake fan 24, and a mesh sidewall 34 at the at least one exhaust fan 26 to facilitate the air flow 30 into the housing 22 and the air flow 31 from the housing 22.

Cryogen, such as liquid nitrogen or carbon dioxide is circulated through the heat exchange coil 28 to provide the necessary cooling of the air flow 30.

Referring to FIG. 3 and to FIG. 4, a tank 36 includes a cryogen, such as for example liquid nitrogen (N₂) or carbon dioxide (CO₂), wherein a pipe 38 transports the cryogen to the heat exchange coil 28 where the liquid vaporizes after the heat exchange, whereupon the vapour returns through pipe 40 to the tank 36.

Referring in particular to FIG.4, a heater coil 42 is disposed at an interior of the heat exchanger 14 between the heat exchange coil 28 and the exhaust fans 26.

The heater coil 42 is disposed downstream of the heat exchange coil 28, and in particular upstream of the at least one exhaust fan 26.

The heater coil 42 is operatively connected to the heat pipe 16. That is, a liquid is circulated through piping 44, 46 interconnecting the heat pipe 16 and the heater coil 42 to provide a continuous, closed loop system. For example, water is circulated between the heat pipe 16 and the heater coil 42 by conduits or pipes 44, 46.

The water flows from the heater coil 42 through the pipe 44, such water being introduced into the heat pipe 16 which is exposed to the hot engine block or engine exhaust. The water is warmed and returned via the pipe 46 back to the heat coil 42 to warm the temperature of the air flow 30 passing over the heat exchange coil 28.

Because the heat exchanger 14 is disposed in the space 18, which can be sealed, an oxygen sensor 48 is provided to be monitored to determine whether the atmosphere in the space is safe for human entry.

A temperature sensor 50 is provided upstream of the at least one intake fan 24 of the heat exchanger 14. The temperature sensor 50 can be connected to a controller (not shown) mounted in a cab of the truck 12 or at another remote location.

The temperature sensor 50 senses whether the air flow being brought back into the heat exchanger 14 to the at least one intake fan 24 needs to be maintained, warmed, or suspended, depending upon the temperature desired for the air flow 30 to be introduced from the heat exchanger 14 into the chamber or space 18.

A bottom of the heat exchanger 14 may be constructed with a grade or at an angle, so that any condensate or sweating developing at an external surface of the heat exchanger 14 proximate the pipes 38, 40 and the pipes 44, 46 runs off into a drain pan 52 for collection of the condensate, instead of dripping into the space 18.

An electrical cable 54 is connected to and provides electrical power for the at least one intake fan 24 and for the at least one exhaust fan 26.

The present embodiments can use a plurality of heat pipes 16 and corresponding piping arranged at both the engine block or manifold, and at the engine exhaust pipe.

Alternatively, at least one heat pipe 16 may be mounted to an exterior surface 21 of the container 20 and connected with coolant pipes 44, 46 for use where the truck 12 or other intermodal platform is transiting an extremely warm or hot environment. The hot atmospheric environment would be used instead of the heat from the engine block or exhaust (cf. reference in FIG. 2).

The at least one heat pipe 16 mounted to the exterior surface 21 would be efficient enough to provide warmer fluid passing through the heater coil 42 able to increase the temperature of the air flow 31 being exhausted into the space 18.

The present embodiments and related methods do not require the use of a separate pump or motor, electrical or otherwise, to provide the heating necessary to reduce the temperature of the air flow being exhausted from the heat exchange coil 28.

The present embodiments operate as a passive system to warm the resulting air flow 31 to a select temperature depending upon the product in the chamber or space 18 and a temperature at an exterior of the container 20.

Heat from the truck engine or exhaust 58, or ambient atmosphere, in particular warm air, external to the container 20, will be absorbed into a wick of the heat pipe 16, and the transfer fluid passing through will boil, expand along the pipe work as it is provided to the heat exchange coil 28 where it will give up its heat, and the resulting vapour will cool and change back to a liquid phase.

Water can, for example, be used as the working heat transfer fluid passing through the coolant pipes 44, 46.

No pump or other power generating device is required to move the water or the vapour of the heat pipe 16, because the process is driven by expansion of the liquid to vapour. That is, the liquid in the pipe 44 is at a greater pressure and will exert a sufficient amount of force on the vapour which occurs in the heat pipe 16 to force the vapour through the pipe 46 back up to the heater coil 42.

The pipes 44, 46 can be sized to accommodate this depending upon whether water or some other fluid is used.

The positioning of the heater coil 42 between the heat exchange coil 28 and the exhaust fans 26 means that a mix of hot and cold air can be blown into the refrigerated vehicle space 18 or, for example, the heat exchanger 14 can be turned off, which results in the air flow 30 only being exposed to the warm vapour at the heater coil 42 and exhausted by the exhaust fans 26 back into the chamber or space 18.

If, for example, the heat pipe 16 is positioned at or adjacent to the engine or engine exhaust, water can be used to pass through the pipes 44, 46. If, on the other hand, the heat pipe is arranged in the warm or hot air external to the container 20, the pipes 44, 46 may contain an alcohol, such as ethanol, which vaporizes more readily since the ambient temperature of the atmosphere will not be as high as that of an engine block or engine exhaust.

In such an application, the heat pipe 16 would be mounted to the exterior surface 21 of the container 20 as close as possible to the heat exchanger 14 so that the distance the alcohol will pass through the pipes 44, 46 is substantially reduced to provide for the effectiveness of the resulting vapour.

A valve control 56 shown in FIG. 2 may be interposed and in communication with the pipe 46 to control the amount of heated vapour or gas necessary to be introduced into the heater coil 42 depending upon whether the temperature of the air flow 31 at the exhaust is to be maintained, raised or lowered.

It will be understood that the embodiments described herein are merely exemplary, and that one skilled in the art may make variations and modifications without departing from the spirit and scope of the invention. All such variations and modifications are intended to be included within the scope of the invention as described and claimed herein. Further, all embodiments disclosed are not necessarily in the alternative, as various embodiments of the invention may be combined to provide the desired result.

### List of reference numerals

- 10: apparatus or system
- 12: truck or vehicle
- 14: heat exchanger
- 16: heat pipe
- 18: chamber or space of container 20
- 20: container
- 21: exterior surface of container 20
- 22: housing
- 24: intake blower or intake fan
- 26: exhaust blower or exhaust fan
- 28: heat exchange coil
- 30: air flow into housing 22
- 31: air flow after housing 22
- 32: mesh sidewall at intake blower or intake fan 24
- 34: mesh sidewall at exhaust blower or exhaust fan 26
- 36: tank, in particular cryogen tank, for example liquid nitrogen (LIN) tank
- 38: conduit or pipe or run, in particular for transporting cryogen, for example liquid nitrogen (LIN), into heat exchange coil 28
- 40: conduit or pipe or run, in particular for returning gas or vapour, for example nitrogen gas or nitrogen vapour, out of heat exchange coil 28 to tank 36
- 42: heater coil
- 44: conduit or pipe or run, in particular coolant conduit or coolant pipe or coolant run, for example cooled liquid return, from heater coil 42 to heat pipe 16
- 46: conduit or pipe or run, in particular coolant conduit or coolant pipe or coolant run, in particular for vapour or warm gas, from heat pipe 16 to heater coil 42
- 48: oxygen sensor
- 50: temperature sensor
- 52: drain pan
- 54: electrical cable
- 56: valve control
- 58: truck engine or exhaust, or ambient atmosphere, in particular warm external air
- C: condense (= prior art; cf. FIG. 1)
- E: evaporate (= prior art; cf. FIG. 1)
- G: gas (= prior art; cf. FIG. 1)
- GT: gas moves in tube (= prior art; cf. FIG. 1)
- HI: heat in (= prior art; cf. FIG. 1)
- HO: heat out (= prior art; cf. FIG. 1)
- L: liquid (= prior art; cf. FIG. 1)
- L: liquid returns in wick W (= prior art; cf. FIG. 1)
- W: wick (= prior art; cf. FIG. 1)

## Claims

1. An apparatus (10) for controlling a temperature of an air flow (30, 31) exhausted from a heat exchanger (14), comprising:
- a heater coil (42) operatively associated with a heat exchange coil (28) of the heat exchanger (14), the heater coil (42) disposed upstream of an exhaust for the heat exchanger (14);
- at least one heat pipe (16) mounted to a heat generating assembly, in particular with said heat generating assembly being selected from the group consisting of an engine, an exhaust for said engine, and a combination thereof; and
- a pipe assembly interconnecting the heater coil (42) and the at least one heat pipe (16), the pipe assembly having a first conduit (44) moving fluid from the heater coil (42) to the at least one heat pipe (16), and a second conduit (46) moving vapour from said fluid from the at least one heat pipe (16) to the heater coil (42) without use of a power generating device.

2. The apparatus according to claim 1, wherein the heat exchanger (14) is mounted in a chamber or space (18) of a container (20).

3. The apparatus according to claim 1 or 2, wherein the heat exchanger (14) comprises a housing (22) having at one side thereof at least one intake fan (24) and at an opposite side thereof at least one exhaust fan (26).

4. The apparatus according to claim 3, wherein the heat exchange coil (28) is disposed in the housing (22) between the at least one intake fan (24) and the at least one exhaust fan (26) so that the air flow (30) is drawn into the housing (22) to pass over the heat exchange coil (28), after which the air flow (31) is exhausted by the at least one exhaust fan (26).

5. The apparatus according to claim 3 or 4, wherein the housing (22) comprises
- a mesh sidewall (32) at the at least one intake fan (24) to facilitate the air flow (30) into the housing (22), and
- a mesh sidewall (34) at the at least one exhaust fan (26) to facilitate the air flow (31) from the housing (22).

6. The apparatus according to claim 2 and to at least one of claims 3 to 5, wherein a temperature sensor (50) is provided upstream of the at least one intake fan (24) and senses whether the air flow being brought back into the heat exchanger (14) to the at least one intake fan (24) needs to be maintained, warmed, or suspended, depending upon the temperature desired for the air flow (30) to be introduced from the heat exchanger (14) into the chamber or space (18).

7. The apparatus according to at least one of claims 3 to 6, wherein an electrical cable (54) is connected to and provides electrical power for the at least one intake fan (24) and for the at least one exhaust fan (26).

8. The apparatus according to at least one of claims 1 to 7, wherein the heater coil (42) is disposed downstream of the heat exchange coil (28), in particular upstream of the at least one exhaust fan (26).

9. The apparatus according to at least one of claims 1 to 8, wherein a tank (36) includes a cryogen, in particular liquid nitrogen (N₂) or carbon dioxide (CO₂), with a pipe (38) transporting the cryogen to the heat exchange coil (28) where the cryogen vaporizes after the heat exchange, whereupon the vapour returns through a pipe (40) to the tank (36).

10. The apparatus according to claim 9, wherein a bottom of the heat exchanger (14) comprises a grade or is constructed at an angle, so that any condensate or sweating developing at an external surface of the heat exchanger (14) proximate the pipes (38, 40) and the conduits (44, 46) runs off into a drain pan (52) for collection of the condensate or sweating.

11. The apparatus according to at least one of claims 1 to 10, wherein a valve control (56) is interposed and in communication with the second conduit (46) to control the amount of heated vapour or gas necessary to be introduced into the heater coil (42) depending upon whether the temperature of the air flow (31) at the exhaust is to be maintained, raised or lowered.

12. A method of controlling a temperature of an air flow (30, 31) exhausted from a heat exchanger (14), comprising:
- moving a liquid from a heat exchange coil (28) of the heat exchanger (14) to at least one heat pipe (16);
- exposing the at least one heat pipe (16) to a heat generating device;
- changing the phase of the liquid to a vapour in the at least one heat pipe (16);
- moving the vapour from the at least one heat pipe (16) to the heat exchange coil (28) without use of a power generating device; and
- moving the air flow (30, 31) exhausted over the heat exchange coil (28) for warming said air flow (30, 31).

13. The method according to claim 12, further comprising monitoring the temperature of the air flow (30, 31) provided to the heat exchanger (14) for adjusting an amount of the vapour introduced to the heat exchange coil (28).

14. The method according to claim 12 or 13, wherein a cryogen, in particular liquid nitrogen (N₂) or carbon dioxide (CO₂), is circulated through the heat exchange coil (28) to provide cooling of the air flow (30).

15. Use of at least one apparatus (10) according to at least one of claims 1 to 11 and/or of a method according to at least one of claims 12 to 14 with at least one intermodal platform, in particular with at least one containerized vehicle transport, for example with at least one barge, railroad flatbed or truck (12).
